# EUROPÄISCHE PATENTSCHRIFT

(11) **EP 4 423 883 B1**
(45) Veröffentlichungstag und Bekanntmachung des Hinweises auf die Patenterteilung: **26.08.2026**
(21) Anmeldenummer: 23701289.3
(22) Anmeldetag: 17.01.2023
(51) Int. Cl.: H02K 7/08, H02K 16/04, H02K 21/22, H02K 1/2791, H02K 3/24, H02K 9/19

(54) **ELEKTRISCHE MEHRPHASENMASCHINE**
ELECTRICAL MULTI-PHASE MACHINE
MACHINE ÉLECTRIQUE POLYPHASÉE

(30) Priorität: 21.01.2022 DE 102022101433; 24.03.2022 DE 102022106997
(43) Veröffentlichungstag der Anmeldung: 04.09.2024
(73) Patentinhaber: Liebherr-Electronics and Drives GmbH, 88131 Lindau (DE)
(72) Erfinder: WAGNER, Tobias, 94481 Grafenau (DE)
(74) Vertreter: Lorenz Seidler Gossel Part. mbB
(86) Internationale Anmeldenummer: PCT/EP2023/051028
(87) Internationale Veröffentlichungsnummer: WO 2023/139070

(56) Entgegenhaltungen:
- EP-A2- 1 079 112
- EP-B1- 1 586 754
- CN-B- 103 095 077
- US-A- 5 677 582
- US-A- 5 838 085
- US-A1- 2022 021 259
- US-B2- 11 211 853
- US-B2- 8 476 798

## Beschreibung

Die vorliegende Erfindung betrifft eine elektrische Mehrphasenmaschine mit einer Statoranordnung und einem relativ dazu drehbar gelagerten Rotor, der einen die Statoranordnung außenseitig umgebenden Außenläufer bildet.

Große Baumaschinen wie Bagger, Raupen oder Krane, sowie Fördermaschinen wie Gabelstapler, Dump Trucks, sowie generell Hebezeuge für schwere Lasten oder landwirtschaftliche Maschinen und Anbaugeräte setzen hinsichtlich der Antriebstechnik häufig auf hydraulische Konzepte, da hohe Leistungsdichten verlangt werden, um bei vernünftiger Baugröße entsprechende Leistungen bereitzustellen, was von Hydrostaten bekanntermaßen gut erfüllt wird. Die Pumpen der hydraulischen Antriebe werden dabei regelmäßig von Verbrennungsmotoren angetrieben, beispielsweise in Form von großen Dieselaggregaten.

Um zumindest lokal emissionsfrei arbeiten zu können, wird in jüngerer Zeit jedoch auch bei solchen energieintensiven Großmaschinen auf elektrische Antriebskonzepte gesetzt, wobei aufgrund der gewünschten, hohen Leistungsdichten regelmäßig Mehrphasenmaschinen zum Einsatz kommen. Beispielsweise können dies permanent magneterregte Synchronmaschinen sein, die als leistungsdichteste Bauform von elektrischen Maschinen gelten. Dabei hängt die erzielbare Leistungsdichte maßgeblich von der Stromdichte ab, die wiederum eine ausreichende Kühlung bedingt, um höhere Stromdichten zuzulassen.

Dabei müssen die Elektromaschinen nicht nur hohe Leistungsdichten realisieren, sondern auch hohe Antriebsmomente bereitstellen, um hydraulische Antriebskonzepte ersetzen zu können. Für hohe Drehmomente sind an sich besonders Außenläufermaschinen geeignet, die bei gleichen Außenabmessungen regelmäßig ein höheres Drehmoment als Innenläufermaschinen bereitstellen können. Durch den außenlaufenden Rotor ergeben sich jedoch besondere Herausforderungen hinsichtlich der Baugröße. Insbesondere können schlanke, längliche Bauformen kaum realisiert werden. Üblicherweise werden Außenläufer als Scheibenläufer mit kurzen Eisenlängen und großen Durchmessern ausgeführt, um mit einer einseitigen, angestellten Lagerung die dann geringeren Kippmomente beherrschen zu können. Solche Scheibenläufer mit kurzen Eisenlängen und kurzen Durchmessern können jedoch nur schwer in Baumaschinen, Förderfahrzeugen oder Hebezeugen untergebracht werden, da dort die Einbauräume begrenzt sind.

Im Stand der Technik sind elektrische Maschinen bekannt, die ähnliche Probleme zu lösen versuchen. Beispielsweise offenbart die Schrift US 8 476 798 B2 eine Tandem-Anordnung für eine elektrische Maschine mit einem äußeren Rotor und zwei Statoren, wobei der Rotor mittig zwischen den beiden Statoren abgestützt wird und jeder Stator eine elektrisch unabhängige Windung aufweist. Eine Anordnung mit zwei Statoren und einem Rotor ist ebenfalls aus der Schrift CN 103 095 077 B oder der Schrift US 5 838 085 A bekannt. Aus der Schrift US 5 677 582 A ist eine ähnliche Anordnung bekannt, wobei hier allerdings der Rotor ebenfalls zweiteilig ausgebildet ist.

Hiervon ausgehend liegt der vorliegenden Erfindung die Aufgabe zugrunde, eine verbesserte elektrische Mehrphasenmaschine zu schaffen, die Nachteile des Standes der Technik vermeidet und letzteren in vorteilhafter Weise weiterbildet. Insbesondere soll eine zu einem Innenläufer vergleichbare Einbaufreundlichkeit mit schlanker Baugröße erreicht werden, die gleichwohl hohe Drehmomente und hohe Leistungsdichten bereitstellen kann.

Erfindungsgemäß wird die genannte Aufgabe durch eine elektrische Mehrphasenmaschine gemäß Anspruch 1 gelöst. Bevorzugte Ausgestaltungen der Erfindung sind Gegenstand der abhängigen Ansprüche.

Es wird also vorgeschlagen, die Statoranordnung in mehrere Statoren zu unterteilen und einen dafür gemeinsamen Rotor vorzusehen, der sich durch die Unterteilung der Statoren zwischen den genannten Statoren abstützen kann. Hierdurch kann eine besser ausbalancierte und gegenüber Kippbelastungen unempfindlichere Lagerung erzielt werden, die im Vergleich zu einer einseitigen, angestellten Lagerung sehr viel längere Rotorbauformen zulässt.

Erfindungsgemäß umfasst die Statoranordnung zwei Statoren, die außenumfangsseitig von dem gemeinsamen Rotor umgeben sind, wobei der Rotor zwischen den beiden Statoren auf einer innenliegenden, von den Statoren umgebenen Motorwelle oder -achse abgestützt ist. Durch die mittige Abstützung des Rotors können sehr viel größere Rotorlängen hinsichtlich der Lagerkräfte beherrscht werden, als dies bei Scheibenläufern mit einseitiger, angestellter Lagerung der Fall ist, sodass insgesamt deutlich schlankere, längliche Bauformen realisiert werden können, wobei nichtsdestotrotz gleichzeitig hohe Drehmomente erzielt werden können. Die vorgeschlagene Anordnung vereint somit die Einbaufreundlichkeit und Form eines Innenläufers mit der höheren Drehmomentdichte eines Außenläufers.

In Weiterbildung der Erfindung sind die zwei Statoren zumindest im Wesentlichen gleichlang ausgebildet und symmetrisch zum gemeinsamen Rotor angeordnet, wobei der sich über beide Statoren erstreckende Rotor mittig und damit ausbalanciert abgestützt sein kann. Der genannte Rotor kann beidseits von der Lagerstelle aus betrachtet gleichweit auskragen bzw. bezüglich der mittigen Lagerstelle symmetrisch ausgebildet sein. Unabhängig hiervon können die beiden genannten Statoren bezüglich der mittigen Abstützstelle des Rotors eine symmetrische Anordnung bilden.

Durch eine symmetrische Aufteilung der Statoren kann die aktive Eisenlänge pro Stator im Vergleich zu einem einzigen Stator halbiert sein, wodurch sich auch die Kühlung der Statoranordnung insgesamt verbessern lässt.

Für die Statoren ist eine Flüssigkühlung vorgesehen, wobei die beiden Statoren parallel gekühlt werden können, um die Kühlwirkung zu verbessern.

Dabei sind die beiden Statoren in einem Kühlmittelkreis parallelgeschaltet angeordnet, sodass beide Statoren gleichermaßen mit noch kühlem Kühlmittel beaufschlagt werden und nicht ein Stator das schon vom anderen Stator erwärmte Kühlmittel zugeführt erhält, wie dies bei seriellen Kühlmittel-Anordnungen oder auch bei einem einzelnen, durchgängigen und langen Stator der Fall ist.

Durch die kürzere Eisenlänge der Statoren in Folge der Teilung der Statoranordnung in zumindest zwei Statoren lässt sich durch die parallele Kühlmittelzuführung eine deutlich verbesserte Kühlwirkung erzielen, was wiederum höhere Stromdichten ermöglicht, um hohe Leistungsdichten zu erzielen.

In Weiterbildung der Erfindung kann die Mehrphasenmaschine eine permanentmagneterregte Maschine, beispielsweise in Form einer permanentmagneterregten Synchronmaschine sein. Die Statoren sind mit einer mehrphasigen Wicklung versehen, während der Rotor mit Permanentmagneten versehen sein kann. Ferner kann die Mehrphasenmaschine auch eine Reluktanzmaschine sein.

Am Rotor können dabei zumindest zwei Permanentmagnete bzw. zwei Felder von Permanentmagneten vorgesehen sein, die beidseits der mittigen Abstützung des Rotors angeordnet sind, insbesondere beidseits eines zentralen bzw. mittigen Lagerflansches des Rotors, mit dem sich der Rotor zwischen den Statoren an der innenliegenden Motorwelle bzw. -achse abstützt.

Die Abstützung bzw. Lagerung des Rotors kann grundsätzlich verschieden ausgebildet sein, beispielsweise zwei gegeneinander angestellte Schräglager beispielsweise in Form von Kegelrollenlager umfassen. In Weiterbildung der Erfindung kann der Rotor aber auch durch eine einfache Fest-Los-Lagerung an zwei Punkten abgestützt sein, wobei das Loslager im Wesentlichen nur radiale Kräfte aufnehmen und das Festlager Radial- und Axialkräfte aufnehmen kann.

Je nach Anbindung des Rotors an die Abtriebswelle - bzw. im Falle eines Generators an die Eingangswelle - kann die Lagerung verschieden ausgebildet sein. Beispielsweise kann der Rotor über die mittige Abstützung drehfest mit der innenliegenden Motorwelle verbunden sein, vorzugsweise axialfest und kippstabil, beispielsweise über eine Profilwellenverbindung oder auf eine Verzahnung axial aufgespannt.

Unabhängig von der konkreten Antriebsverbindung des Rotors kann die innenliegende Motorwelle bzw. -achse an gegenüberliegenden Endabschnitten bzw. gegenüberliegenden Gehäuseabschnitten gelagert sein, beispielsweise durch eine vorgenannte Fest-Los-Lagerung. Beispielsweise kann die Lagerung der Motorwelle bzw. -achse im Bereich der gegenüberliegenden axialen Stirnseiten der Statoranordnung vorgesehen sein. Hierdurch kann durch den entsprechend großen Lagerabstand eine stabile Abstützung erzielt werden.

Um eine hohe Leistungsdichte bei kompakter, schlanker Bauweise zu erzielen, kann der Rotor eine axiale Länge besitzen, die größer ist als ein Außendurchmesser des Rotors. Beispielsweise kann die axiale Länge des Rotors im Bereich von 125% bis 500% oder 125% bis 200% des Rotordurchmessers betragen.

Die beiden Statoren können zusammen eine axiale Länge aufweisen, die im Bereich der axialen Länge des Rotors liegt, aber im Vergleich dazu ein Stück weit kleiner oder auch ein Stück weit größer sein kann. Beispielsweise kann die Summe der beiden Statoren, jeweils gemessen als deren Eisenlänge, 75% bis 100% der gesamten axialen Länge des Rotors betragen. Insbesondere kann die Eisenlänge der beiden Statoren in Summe betrachtet etwa der Summe der axialen Längen der beiden Felder von Permanentmagneten entsprechen, die am Rotor angebracht sind.

Vorteilhafterweise kann durch den vorgeschlagenen Aufbau der Mehrphasenmaschine eine Maschinenbaureihe geschaffen werden, bei der die Maschinen bzw. Maschinenmodelle grundsätzlich den gleichen Aufbau besitzen können, jedoch die Anzahl der Phasen je nach Baugröße variieren kann.

Dabei kann auch die Kombination von Phasen und Polzahl je nach Anwendungszweck angepasst und variiert werden. Hierdurch wird ein Baukastensystem erzielt.

Die Erfindung wird nachfolgend anhand eines bevorzugten Ausführungsbeispiels und zugehörigen Zeichnungen näher erläutert. In den Zeichnungen zeigen:
- Fig. 1:: einen Längsschnitt durch eine elektrische Mehrphasen-Außenläufermaschine mit zwei symmetrisch angeordneten Statoren ohne Sternpunkt unter einem gemeinsamen Rotor sowie einer direkt gekühlten Wicklung an den Statoren gemäß einer vorteilhaften Ausführungsform der Erfindung,
- Fig. 2:: einen ausschnittsweisen Längsschnitt durch einen der Statoren der Mehrphasenmaschine aus Fig. 1, der den Kühlmittelfluss durch den Stator zeigt,
- Fig. 3:: eine Querschnittsansicht einer Wicklungsnut und der darin aufgenommenen Wicklung aus trapezförmigem Wicklungsdraht zur Verbesserung der Kühlmittelumspülung,
- Fig. 4:: ein Ersatzschaltbild einer sternlosen Mehrphasenwicklung und des angeschlossenen Wechselrichters mit Vollbrücken gemäß einer vorteilhaften Ausführung der Erfindung, und
- Fig. 5:: ein Ersatzschaltbild einer Dreiphasenwicklung, die im Vergleich zur Figur 4 mit einem Sternpunkt ausgeführt ist.

Wie die Figuren zeigen, umfasst die elektrische Mehrphasenmaschine 1, die als Antriebsmotor fungieren, aber auch als Generator arbeiten kann, eine Statoranordnung 2 und einen relativ dazu drehbar gelagerten Rotor 5, der einen die Statoranordnung 2 außenumfangsseitig umgebenden Außenläufer bildet.

Eine solche Außenläufermaschine kann für hohe Drehmomente konzipiert werden und eine hohe Leistungsdichte besitzen, um große Baumaschinen, Förderfahrzeuge bzw. -maschinen oder Hebezeuge wie Krane oder landwirtschaftliche Fahrzeuge sowie Anbaugeräte anzutreiben. Dabei kann die Außenläufermaschine als Fahrantrieb dienen oder ein Hauptfunktionsaggregat der jeweiligen Maschine antreiben, beispielsweise das Hubwerk eines Krans. Beispielsweise kann die Mehrphasenmaschine für Dauerleistungen von mehreren hundert kW ausgelegt sein, beispielsweise 200 - 500 kW, um Hydrostaten bzw. hydrostatische Antriebsanordnungen ersetzen zu können.

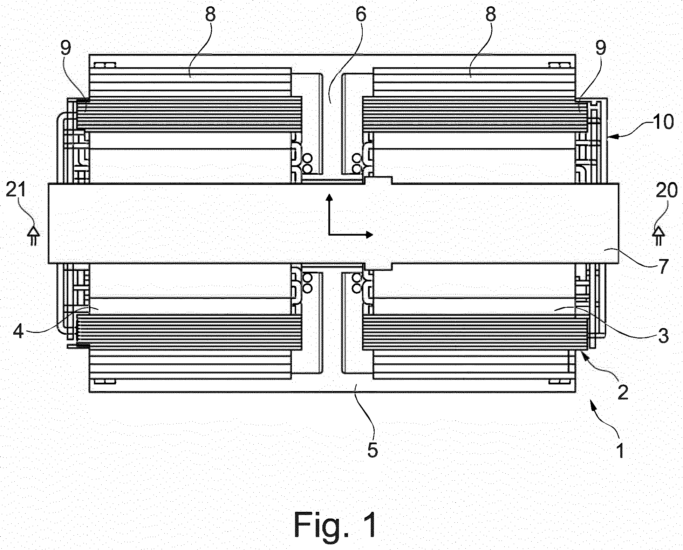

Wie Fig. 1 zeigt, kann die Statoranordnung 2 in zwei Statoren 3, 4 unterteilt sein, die koaxial zueinander und voneinander beabstandet angeordnet sein können.

Die beiden Statoren 3, 4 sind dabei außenumfangsseitig von einem gemeinsamen Rotor 5 umgeben, der mit beiden Statoren zusammenwirkt.

Vorteilhafterweise kann der Rotor 5 mit einem oder mehreren Permanentmagneten 8 bestückt sein, während die Statoranordnung 2 mit einer Wicklung 9 versehen ist, wie noch näher erläutert wird.

Durch die Unterteilung der Statoranordnung 2 in zwei beabstandete Statoren 3, 4 kann der gemeinsame Rotor 5 in einem Mittelabschnitt zwischen den beiden Statoren 3, 4 abgestützt sein. Insbesondere kann der Rotor 5 exakt mittig eine Abstützung 6 aufweisen, die sich zwischen den beiden Statoren 3, 4 hindurch zu einer innenliegenden Motorwelle 7 bzw. -achse erstrecken kann, wobei die genannte Abstützung 6 beispielsweise einen sich radial erstreckenden oder ringförmigen Abstützsteg umfassen kann, der sich von der Innenumfangswandung des rohrförmigen Rotorkorpus nach innen vorspringend zwischen den Statoren 3, 4 erstrecken kann.

Die Abstützung 6 kann an der Motorwelle 7 bzw. -achse kippfest und/oder axialfest und/oder drehfest befestigt sein. Wird die Antriebsbewegung des Rotors 5 über die Motorwelle 7 abgeleitet - oder bei Verwendung als Generator über die genannte Welle 7 in den Rotor 5 eingeleitet - kann der Rotor 5 über die Abstützung 6 drehfest und vorzugsweise auch kippfest sowie axialfest an der genannten Welle 7 verankert sein, beispielsweise formschlüssig durch geeignete Verbindungsmittel wie beispielsweise ein Keilwellenprofil. Alternativ oder zusätzlich kann die Rotorabstützung 6 auch an der Welle 7 verpresst sein.

Die genannte Welle kann an gegenüberliegenden Endabschnitten und/oder an gegenüberliegenden, stirnseitigen Gehäuseabschnitten beispielsweise angrenzend an die stirnseitigen Enden der Statoranordnung 2 durch eine Lageranordnung mit zwei Lagerpunkten 20, 21 abgestützt sein, wobei hier beispielsweise eine einfache Fest-Los-Lagerung vorgesehen sein kann, welche ein Radiallager einerseits und ein kombiniertes Axial-/Radiallager, beispielsweise in Form geeigneter Wälzlager, umfassen kann.

Die genannte Welle 7 erstreckt sich dabei im Inneren der Statoranordnung 2 koaxial hierzu.

Wie Fig. 1 zeigt, ist die Statoranordnung 3, 4 mit einer mehrphasigen Wicklung 9 versehen.

Der Rotor 5 kann mit zwei Feldern von Permanentmagneten 8 bestückt sein, die jeweils unmittelbar außenumfangsseitig über eine der Wicklungen 9 der Statoranordnung 2 laufen, wobei die Permanentmagnete 8 innenumfangsseitig vollständig von einer der Wicklungen 9 überdeckt sein können, vgl. Fig. 1.

Die Permanentmagnete 8 können jeweils eine axiale Länge besitzen, die im Wesentlichen der axialen Eisenlänge des zugehörigen Stators 3, 4 entsprechen kann.

Insbesondere kann der Rotor 5 einschließlich der Permanentmagnete 8 bezüglich der zentralen Abstützung 6 symmetrisch ausgebildet sein. Auch die Anordnung der Statoren 3, 4 kann bezüglich der zentralen Abstützung 6 symmetrisch sein.

Wie Fig. 1 zeigt, kann die Mehrphasenmaschine 1 durch die Zentralabstützung 6 des Rotors 5 eine schlanke, längliche Bauweise besitzen. Der Rotor 5 kann eine axiale Länge besitzen, die größer ist als der Durchmesser des Rotors 5, beispielsweise im Bereich von 150% - 200% des Rotordurchmessers betragen kann.

Die genannte Rotorlänge, d.h. die Erstreckung des Rotors 5 in Richtung der Motorwelle 7, kann zumindest näherungsweise der Summe der beiden axialen Längen der Statoren 3, 4 entsprechen.

Zur Kühlung der Mehrphasenmaschine 1 ist eine Flüssigkühlung 10 für die Statoranordnung 2 vorgesehen, wobei die beiden Statoren 3, 4 parallel in einem Kühlkreis angeordnet sind, so dass jeder Stator 3, 4 gleichermaßen von kühlem Kühlmittel durchströmt werden kann und nicht einer der Statoren das bereits vom anderen Stator aufgewärmte Kühlmittel bekommt. Durch eine solche parallele Kühlung der Statoren 3, 4 kann die Kühlwirkung deutlich verbessert werden, was eine deutlich höhere Stromdichte zulässt. Hierdurch kann eine hohe Leistungsdichte erzielt werden.

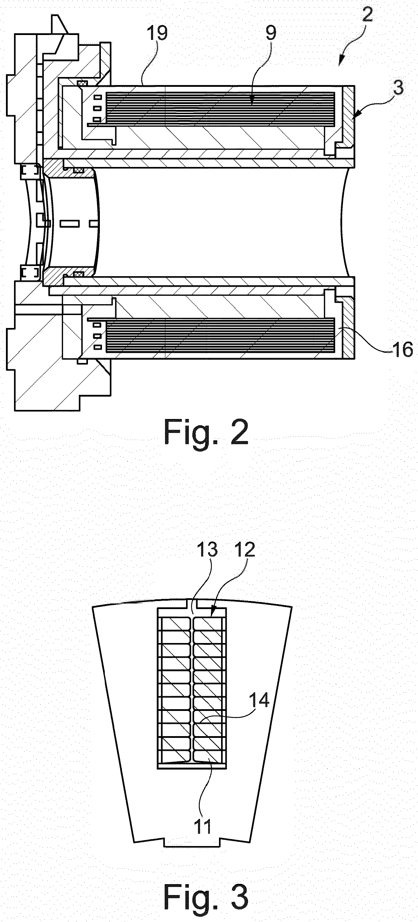

Wie Fig. 2 zeigt, kann die Flüssigkühlvorrichtung 10 dazu ausgebildet sein, den Wicklungsdraht 11 der Wicklungsspulen 12 der Mehrphasenwicklung 9 direkt mit Kühlflüssigkeit zu umspülen. Mit anderen Worten, das Kühlmittel wird nicht durch Kühlrohre bzw. Kühlrohrschlangen durch die Wicklung 9 hindurch geführt, sondern umspült direkt die Wicklungsdrähte 11.

Hierzu können die Wicklungsspulen 12 in Statornuten 13 aufgenommen sein, die jeweils als Kühlmittelkanal ausgebildet sind und einen Teil des Kühlkreises bilden, so dass das Kühlmittel in den genannte Statornuten den Wicklungsdraht 11 direkt umspülen kann. Die Wandungen der Statornuten bilden dabei eine Kühlkanalwandung, so dass die Wicklungsdrähte sozusagen in der Kühlflüssigkeit schwimmen.

Um die Wärmeübergangsfläche des Wicklungsdrahts 11 zum Kühlmittel zu erhöhen, können die Wicklungsspulen vorteilhafterweise unvergossen ausgebildet sein und zwischen den Wicklungsdrähten 11 Kühlspalten 14 bzw. Freiräume bzw. Zwischenräume aufweisen, die von der Kühlflüssigkeit durchspülbar sind, um den Wicklungsdraht 11 mehrseitig, vorzugsweise von allen Seiten mit Kühlflüssigkeit zu umspülen.

Um die Kühlwirkung gezielt zu erhöhen, können die Wicklungsspulen 12 vorteilhafterweise einlagig konzentriert gewickelt sein. Durch die einlagige Wicklung kommt das umspülende Kühlmittel zuverlässig an alle Wicklungsdrähte, was die Kühlwirkung beträchtlich verbessert und die Bildung von Hotspots in der Wicklung verhindert. Durch die konzentrierte Wicklung kann nichtsdestotrotz eine hohe Leistungsdichte und eine insgesamt kompakte Bauweise erzielt werden. Konzentrierte Wicklung meint dabei, dass jeder Zahn der Statorbleche vom Wicklungsdraht 11 umwickelt ist.

Vorteilhafterweise kann der Wicklungsdraht einen trapezförmigen Querschnitt besitzen, so dass sich bei der Umwicklung der Statorblechzähne ausreichend große Kühlspalte 14 zwischen den Wicklungsgängen bzw. zwischen benachbarten Wicklungsdrahtabschnitten bilden und das Kühlmittel in die Wicklungslage eindringen bzw. den Wicklungsdraht mehrseitig umspülen kann.

Der genannte Wicklungsdraht 12 kann vorteilhafterweise elastisch isoliert beschichtet sein, beispielsweise mit einer hochtemperaturresistenten Thermoplastbeschichtung. In vorteilhafter Weiterbildung der Erfindung kann der Wicklungsdraht 11 der Wicklung 9 eine PEEK, d.h. Polyetheretherketon-Beschichtung aufweisen.

Um die mehrlagige Wicklung 9 des Stators 3, 4 gleichmäßig zu kühlen, können die mehreren Wicklungsphasen bzw. die Statornuten 13 von der Kühlflüssigkeit parallel durchströmt werden. Die genannten Statornuten können in einem Kühlkreis zueinander parallel geschaltet sein und parallel vom Kühlmittel durchströmt werden.

Um die genannten Statornuten 13 gleichmäßig zu kühlen, kann stromauf einer Stirnseite der Statorwicklung 9, beispielsweise in einer Zwischenplatte zwischen Motor und Wechselrichter, ein Einlaufverteiler vorgesehen sein, der das von der Kaltseite des Kühlsystems herkommende Kühlmittel auf die verschiedenen Statornuten 13 verteilt. Der genannte Einlassverteiler kann beispielsweise einen Ringraum an der Stirnseite der Wicklung 9 umfassen, an die bzw. an den die Statornuten 13 mit ihren stirnseitigen Enden kommunizierend angebunden sind.

Auslassseitig können die Statornuten 13 an einen Sammelauslauf 16 der Flüssigkeitskühlvorrichtung 10 angebunden sein, wobei der genannte Sammelauslauf 16 beispielsweise einen Ringraum am stirnseitigen Ende des jeweiligen Stators 3, 4 aufweisen kann, mit dem die Statornuten 13 in Strömungsverbindung stehen, so dass aus den Statornuten 13 herauslaufenden Kühlflüssigkeit in dem Sammelauslauf 16 gesammelt wird.

Wie Fig. 2 zeigt, kann die Kühlflüssigkeit im Gegenstrom bzw. axial gegenläufig durch den Stator 3, 4 geführt sein. Das von der Kaltseite herkommende kalte Kühlmittel kann parallel durch die Statornuten 13 in einer ersten Axialrichtung beispielsweise gemäß Fig. 2 von links nach rechts durch den Stator 3, 4 strömen, während das gesammelte, aufgeheizte Kühlmittel in einer dazu entgegengesetzten Axialrichtung, also beispielsweise gemäß Fig. 2 von rechts nach links durch Ablaufkanäle 17 zurück an die Stirnseite des Stators geführt werden kann, an der auch das kalte Kühlmittel zugeführt wurde.

Um den von Kühlflüssigkeit durchströmten Stator 3, 4 gegenüber dem Rotor 5 fluiddicht abzudichten, kann der Stator 3, 4 von einer Dichtungshülse bzw. einem Dichtungsrohr 19 umgeben sein, das den Stator, insbesondere dessen Wicklungsnuten 13, abdichtet bzw. kapselt. Ein solches hülsenförmiges Dichtungsrohr 19 kann sich insbesondere um den Stator 3, 4 herum und zwischen Stator 3, 4 und Rotor 5 erstrecken, beispielsweise auf der Außenumfangsseite des Stators 3, 4 sitzen.

Hierbei kann beispielsweise ein Kohlefaserrohr oder ein ähnliches Kunststoffrohr, beispielsweise ein GFK-Rohr oder ein thermoplastisches Rohr aus ausreichend temperaturfestem Thermoplast als Dichtungsrohr Verwendung finden. Alternativ oder zusätzlich kann als Dichtungsrohr aber auch eine Hülse aus Edelstahl oder einem anderen nicht-magnetischem Material oder Materialmischungen zum Einsatz kommen.

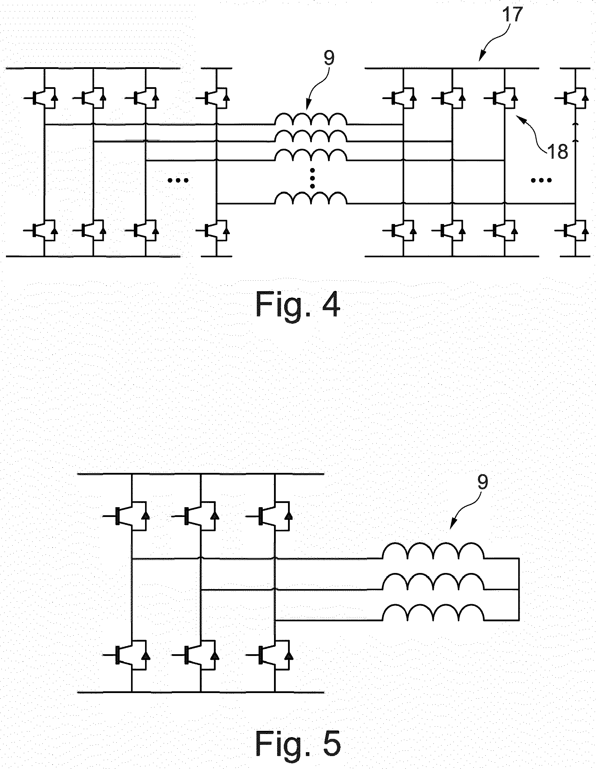

Die Statorwicklung 9 ist, wie Fig. 4 zeigt, sternlos ausgebildet und weist mehr als drei Phasen auf. Die Wicklung 9 kann auch mehr als vier oder beispielsweise fünf, sieben oder neun Phasen aufweisen, wobei acu 11 oder 13 oder mehr Phasen möglich sind. Eine beispielsweise neunphasige Wicklung aus konzentrierten Spulen 12 ohne Sternpunkt ermöglicht eine individuelle Ansteuerung der einzelnen Phasen, was in geschickter Weise zur Verbesserung des Maschinenbetriebs genutzt werden kann. Da bei Mehrphasenwicklungen ohne Sternpunkt grundsätzlich keine Nullsummen-Strombedingung gilt, d.h. die Summe der Phasenströme nicht zwingend Null sein muss, können grundsätzlich verschiedene bzw. beliebige Stromformen realisiert werden. Dies erlaubt es beispielsweise im Fehlerfall wie beispielsweise einem Kurzschluss zwischen zwei Phasen oder einem Leitungsbruch den Maschinenbetrieb zumindest eingeschränkt fortsetzen zu können. Hierzu kann die Bestromung der verbleibenden funktionsfähigen Phasen angepasst werden.

Vorzugsweise ist die Phasenzahl ungerade, um einen maximalen Wicklungsfaktor zu erhalten, wobei vorteilhafterweise fünf Phasen oder sieben Phasen oder neuen Phasen oder mehr vorgesehen sein können.

Die Anzahl der Pole kann dabei größer oder kleiner als die Anzahl der Phasen sein.

Unabhängig hiervon kann durch intelligente, individuelle Bestromung der einzelnen Phasen je nach Lastbereich und Position des Rotors eine Betriebsoptimierung erzielt werden. Beispielsweise kann für bestimmte Lastbereiche durch Anpassung der Bestromung die mittlere Kupfertemperatur bzw. Drahttemperatur gesenkt werden.

Grundsätzlich kann durch eine vielphasige Wicklung ohne Sternpunkt, beispielsweise in Form der genannten Neunphasenwicklung ohne Sternpunkt, auch die Drehmomentwelligkeit signifikant, insbesondere um mehr als 50% gesenkt werden. Gerade Maschinen mit konzentrierter Wicklung neigen an sich zu einer relativ hohen Welligkeit im Drehmomentsverlauf. Durch die vorgeschlagene hohe Phasenzahl erhöht sich jedoch die Frequenz der Drehmomentwelligkeit, während gleichzeitig deren Amplitude sinkt. Grundsätzlich kommen auch mehr als neun Wicklungsphasen in Betracht, beispielsweise elf Phasen oder dreizehn Phasen oder auch fünfzehn Phasen. Eine Wicklung mit neun Phasen ist jedoch ein guter Kompromiss zwischen geringer Welligkeit im Drehmomentverhalten und noch moderatem Montageaufwand bei kompakter Bauweise mit konzentrierter Wicklung.

Wie Fig. 4 zeigt, kann vorteilhafterweise die sternlose Wicklung 9 an einen Wechselrichter 17 mit Vollbrücken, insbesondere in Form von H-Brücken, angebunden werden. Ein solcher Wechselrichter mit Vollbrücken erlaubt eine unabhängige Bestromung der einzelnen Phasen, um die Bestromung beispielsweise im Fehlerfall anpassen oder je nach Lastbereich oder Position des Rotors optimal steuern zu können. Insbesondere erlaubt es ein solcher Wechselrichter mit Vollbrücken auch, die einzelnen Phasen mit variablem Zeitversatz anzusteuern bzw. zu bestromen.

Im Vergleich zu der sternlosen Vielphasenwicklung der Fig. 4 zeigt Fig. 5 eine an sich herkömmliche Dreiphasenwicklung mit Sternpunkt.

## Patentansprüche

1. Elektrische Mehrphasenmaschine mit einer Statoranordnung (2) und einem relativ dazu drehbar gelagerten Rotor (5), der einen die Statoranordnung (2) außenumfangsseitig umgebenden Außenläufer bildet, wobei die Statoranordnung (2) zwei Statoren (3, 4) umfasst, die außenseitig von dem gemeinsamen Rotor (5) umgeben sind, wobei der Rotor (5) zwischen den beiden Statoren (3, 4) mittels einer Abstützung (6) auf einer innenliegenden, von den Statoren (3, 4) umgebenen Maschinenwelle (7) oder -achse abgestützt ist; **dadurch gekennzeichnet, dass**
eine Flüssig-Kühl-Vorrichtung (10) für die beiden Statoren (3, 4) vorgesehen ist, wobei die beiden Statoren (3, 4) in einem Kühlmittelkreis parallelgeschaltet angeordnet sind; und
die Statoranordnung (2) mit den beiden Statoren (3, 4) eine sternlose Wicklung (9) mit mehr als drei Phasen aufweist.

2. Elektrische Mehrphasenmaschine nach dem vorhergehenden Anspruch, wobei die zwei Statoren (3, 4) im Wesentlichen gleichlang ausgebildet und symmetrisch zum gemeinsamen Rotor (5) und dessen zentralen Abstützung (6) ausgebildet sind, wobei der Rotor (5) durch die Abstützung (6) mittig abgestützt ist und bezüglich der Abstützung symmetrisch ausgebildet ist.

3. Elektrische Mehrphasenmaschine nach einem der vorhergehenden Ansprüche, wobei der als Außenläufer ausgebildete Rotor (5) durch eine Fest-Los-Lagerung an zwei voneinander beabstandeten Lagerpunkten abgestützt ist.

4. Elektrische Mehrphasenmaschine nach einem der vorhergehenden Ansprüche, wobei der Rotor (5) kippfest und drehfest an der innenliegenden Maschinenwelle (7) oder -achse befestigt ist, die ihrerseits an gegenüberliegenden Endabschnitten oder Stirnseiten, insbesondere im Bereich der gegenüberliegenden Stirnseiten der Statoranordnung (2) und/oder gegenüberliegenden Gehäuseseiten, drehbar gelagert ist, wobei die genannte Motorwelle (7) durch zumindest zwei Wälzlager drehbar gelagert ist, die zusammen eine Fest-Los-Lagerung bilden.

5. Elektrische Mehrphasenmaschine nach einem der vorhergehenden Ansprüche, wobei der als Außenläufer ausgebildete Rotor (5) eine axiale Länge besitzt, die größer ist als ein Durchmesser des Außenläufers.

6. Elektrische Mehrphasenmaschine nach einem der vorhergehenden Ansprüche, wobei die Wicklung (9) der beiden Statoren (3, 4) Wicklungsspulen (12) aufweist, die in Statornuten (13) aufgenommen sind, die jeweils als Kühlmittelkanal ausgebildet sind, und ein durch die Statornuten fließendes Kühlmittel in den Statornuten den Wicklungsdraht (11) umspült.

7. Elektrische Mehrphasenmaschine nach dem vorhergehenden Anspruch, wobei die Wicklungsspulen (12) unvergossen ausgebildet sind und von Kühlflüssigkeit durchspülbare Kühlspalten (14) zwischen benachbarten Abschnitten des Wicklungsdrahts (11) einer Spule vorgesehen sind.

8. Elektrische Mehrphasenmaschine nach einem der beiden vorhergehenden Ansprüche, wobei die zwei Statoren (3, 4), insbesondere mit Kühlflüssigkeit durchspülten Statornuten (13), durch ein Dichtungsrohr (19), das zwischen den Statoren (3, 4) und Rotor (5) angeordnet ist und die Statoren (3, 4) außenumfangsseitig umschließt, gegenüber dem Rotor (5) abgedichtet sind.

9. Elektrische Mehrphasenmaschine nach einem der vorhergehenden Ansprüche, wobei der Wicklungsdraht (11) der Wicklungsspulen (12) einen trapezförmigen oder dreieckigen Querschnitt besitztund elektrisch isolierend beschichtet ist, insbesondere mit einer Beschichtung aus einem Hochtemperatur-resistenten Thermoplast, insbesondere mit einer PEEK-Beschichtung, versehen ist.

10. Elektrische Mehrphasenmaschine nach einem der vorhergehenden Ansprüche, wobei die Wicklungsspulen (12) der Wicklung (9) des Stators (3, 4) einlagig und konzentriert gewickelt sind.

11. Elektrische Mehrphasenmaschine nach einem der vorhergehenden Ansprüche, wobei die Statornuten (13) zueinander parallelgeschaltet an einen Einlassverteiler zur Zuführung von Kühlflüssigkeit angebunden sind und parallel von der Kühlflüssigkeit durchströmbar sind, wobei die Statornuten (13) der beiden Statoren (3, 4) an einer axialen Stirnseite der Statoren (3, 4) mit einem an der genannten Statorstirnseite vorgesehenen Ringraum zum Zuführen der Kühlflüssigkeit strömungsverbunden sind und/oder an einer gegenüberliegenden Stirnseite der Statoren (3, 4) mit einem dort vorgesehenen Sammelauslauf (16) strömungsverbunden sind.

12. Elektrische Mehrphasenmaschine nach einem der vorhergehenden Ansprüche, wobei die Kühlflüssigkeit in axial gegenläufigen Richtungen zunächst von der Kaltseite des Kühlkreises her parallel durch die Statornuten (13) für die Wicklungsspulen (12) von einer Stirnseite zur gegenüberliegenden Stirnseite des Stators (3, 4) hindurchgeführt ist und sodann die von den Wicklungsspulen (12) aufgeheizte Kühlflüssigkeit in axial entgegengesetzter Richtung durch den Statorträger hindurch zurück zur Zuströmseite geführt wird.

13. Elektrische Mehrphasenmaschine nach einem der vorhergehenden Ansprüche, wobei die statorseitige Wicklung (9) mehr als 4 oder mehr als sechs Phasen, vorteilhafterweise neun Phasen, aufweist .

14. Elektrische Mehrphasenmaschine nach einem der vorhergehenden Ansprüche, wobei die Wicklungsphasen der statorseitigen Wicklung (9) an eine Ansteuerschaltung zum individuellen Bestromen der einzelnen Phasen angebunden sind, und die genannte Ansteuerschaltung einen Wechselrichter (17) mit Vollbrücken, insbesondere in Form von H-Brücken (18) zum Bestromen der einzelnen Phasen mit variablem Zeitversatz aufweist.

15. Bau- und/oder Flurfördermaschine wie Bagger, Raupe oder Dump Truck, oder Hebezeug wie Kran, oder landwirtschaftliche Arbeitsmaschine, mit einer elektrischen Mehrphasenmaschine (1), die gemäß einem der vorhergehenden Ansprüche ausgebildet ist.

## Claims

1. An electric multiphase machine comprising a stator arrangement (2) and a rotor (5) mounted so as to be rotatable relative thereto, which rotor forms an outer rotor surrounding the stator arrangement (2) on the outer circumferential side, wherein the stator arrangement (2) comprises two stators (3, 4) that are surrounded on the outside by the common rotor (5), wherein the rotor (5) is supported between the two stators (3, 4), by means of a support (6), on an internal machine shaft (7) or axle surrounded by the stators (3, 4),
**characterized in that**
a liquid-cooling device (10) is provided for the two stators (3, 4), wherein the two stators (3, 4) are arranged in parallel in a coolant circuit; and
the stator arrangement (2), comprising the two stators (3, 4), has a star-point-free winding (9) with more than three phases.

2. The electric multiphase machine according to the preceding claim, wherein the two stators (3, 4) are configured with substantially the same length and are configured symmetrically with respect to the common rotor (5) and its central support (6), wherein the rotor (5) is centrally supported by the support (6) and is configured symmetrically with respect to the support.

3. The electric multiphase machine according to any one of the preceding claims, wherein the rotor (5), configured as an outer rotor, is supported by a locating/non-locating bearing arrangement at two mutually spaced-apart bearing points.

4. The electric multiphase machine according to any one of the preceding claims, wherein the rotor (5) is mounted in a tilt-resistant and rotationally fixed manner on the internal machine shaft (7) or axle, which is itself rotatably mounted at opposite end portions or end faces, in particular in the region of the opposite end faces of the stator arrangement (2) and/or opposite housing sides, wherein said motor shaft (7) is rotatably mounted by at least two rolling-element bearings that together form a locating/non-locating bearing arrangement.

5. The electric multiphase machine according to any one of the preceding claims, wherein the rotor (5), configured as an outer rotor, has an axial length that is greater than a diameter of the outer rotor.

6. The electric multiphase machine according to any one of the preceding claims, wherein the winding (9) of the two stators (3, 4) comprises winding coils (12) that are received in stator slots (13), each of which is configured as a coolant channel, and a coolant flowing through the stator slots flows around the winding wire (11) in the stator slots.

7. The electric multiphase machine according to the preceding claim, wherein the winding coils (12) are unpotted, and cooling gaps (14), through which cooling liquid can flow, are provided between adjacent portions of the winding wire (11) of a coil.

8. The electric multiphase machine according to either one of the two preceding claims, wherein the two stators (3, 4), in particular stator slots (13) through which cooling liquid flows, are sealed off from the rotor (5) by a sealing tube (19), which is arranged between the stators (3, 4) and the rotor (5) and encloses the stators (3, 4) on the outer circumferential side.

9. The electric multiphase machine according to any one of the preceding claims, wherein the winding wire (11) of the winding coils (12) has a trapezoidal or triangular cross-section and is coated with an electrically insulating coating, in particular with a coating made of a high-temperature-resistant thermoplastic, in particular a PEEK coating.

10. The electric multiphase machine according to any one of the preceding claims, wherein the winding coils (12) of the winding (9) of the stator (3, 4) are wound in a single layer and in a concentrated manner.

11. The electric multiphase machine according to any one of the preceding claims, wherein the stator slots (13) are connected in parallel to an inlet manifold for supplying cooling liquid and can be traversed in parallel by the cooling liquid, wherein the stator slots (13) of the two stators (3, 4), at an axial end face of the stators (3, 4), are in fluid communication with an annular chamber provided at said stator end face for supplying the cooling liquid and/or, at an opposite end face of the stators (3, 4), are in fluid communication with a collecting outlet (16) provided there.

12. The electric multiphase machine according to any one of the preceding claims, wherein the cooling liquid is initially conducted, in axially opposite directions, from the cold side of the cooling circuit in parallel through the stator slots (13) for the winding coils (12), from one end face to the opposite end face of the stator (3, 4), and the cooling liquid heated by the winding coils (12) is then conducted in the axially opposite direction through the stator carrier back to the inflow side.

13. The electric multiphase machine according to any one of the preceding claims, wherein the stator-side winding (9) has more than four or more than six phases, advantageously nine phases.

14. The electric multiphase machine according to any one of the preceding claims, wherein the winding phases of the stator-side winding (9) are connected to a control circuit for individually energizing the individual phases, and said control circuit comprises an inverter (17) having full bridges, in particular in the form of H-bridges (18), for energizing the individual phases with a variable time offset.

15. A construction machine and/or industrial truck, such as an excavator, crawler tractor, or dump truck, or lifting equipment, such as a crane, or an agricultural working machine, comprising an electric multiphase machine (1) configured according to any one of the preceding claims.

## Revendications

1. Machine électrique polyphasée comprenant un ensemble statorique (2) et un rotor (5) monté de manière rotative par rapport à celui-ci, lequel rotor constitue un rotor extérieur entourant l'ensemble statorique (2) sur son pourtour extérieur, l'ensemble statorique (2) comprenant deux stators (3, 4) qui sont entourés extérieurement par le rotor commun (5), le rotor (5) étant supporté entre les deux stators (3, 4), au moyen d'un support (6), sur un arbre de machine (7) ou un axe interne entouré par les stators (3, 4),
**caractérisée en ce que**
un dispositif de refroidissement par liquide (10) est prévu pour les deux stators (3, 4), les deux stators (3, 4) étant disposés en parallèle dans un circuit de fluide de refroidissement ; et
l'ensemble statorique (2), avec les deux stators (3, 4), présente un enroulement (9) dépourvu de point étoile et comportant plus de trois phases.

2. Machine électrique polyphasée selon la revendication précédente, dans laquelle les deux stators (3, 4) sont réalisés avec une longueur sensiblement identique et symétriquement par rapport au rotor commun (5) et à son support central (6), le rotor (5) étant supporté en son milieu par le support (6) et étant réalisé symétriquement par rapport au support.

3. Machine électrique polyphasée selon l'une quelconque des revendications précédentes, dans laquelle le rotor (5), réalisé sous la forme d'un rotor extérieur, est supporté, au niveau de deux points de palier espacés l'un de l'autre, par un montage à palier fixe et palier libre.

4. Machine électrique polyphasée selon l'une quelconque des revendications précédentes, dans laquelle le rotor (5) est fixé de manière résistante au basculement et solidaire en rotation à l'arbre de machine (7) ou à l'axe interne, cet arbre ou axe étant lui-même monté rotatif au niveau de sections d'extrémité ou de faces frontales opposées, notamment dans la zone des faces frontales opposées de l'ensemble statorique (2) et/ou de côtés opposés du boîtier, ledit arbre moteur (7) étant monté rotatif au moyen d'au moins deux roulements à éléments roulants qui forment ensemble un montage à palier fixe et palier libre.

5. Machine électrique polyphasée selon l'une quelconque des revendications précédentes, dans laquelle le rotor (5), réalisé sous la forme d'un rotor extérieur, possède une longueur axiale supérieure à un diamètre du rotor extérieur.

6. Machine électrique polyphasée selon l'une quelconque des revendications précédentes, dans laquelle l'enroulement (9) des deux stators (3, 4) comprend des bobines d'enroulement (12) qui sont reçues dans des encoches statoriques (13), chacune desdites encoches étant réalisée sous la forme d'un canal de fluide de refroidissement, et un fluide de refroidissement circulant à travers les encoches statoriques s'écoule autour du fil d'enroulement (11) dans les encoches statoriques.

7. Machine électrique polyphasée selon la revendication précédente, dans laquelle les bobines d'enroulement (12) sont réalisées sans encapsulage et des interstices de refroidissement (14), pouvant être traversés par du liquide de refroidissement, sont prévus entre des sections adjacentes du fil d'enroulement (11) d'une bobine.

8. Machine électrique polyphasée selon l'une quelconque des deux revendications précédentes, dans laquelle les deux stators (3, 4), notamment les encoches statoriques (13) traversées par du liquide de refroidissement, sont rendus étanches par rapport au rotor (5) au moyen d'un tube d'étanchéité (19), qui est disposé entre les stators (3, 4) et le rotor (5) et entoure les stators (3, 4) sur leur pourtour extérieur.

9. Machine électrique polyphasée selon l'une quelconque des revendications précédentes, dans laquelle le fil d'enroulement (11) des bobines d'enroulement (12) possède une section transversale trapézoïdale ou triangulaire et est revêtu d'une couche électriquement isolante, étant notamment pourvu d'un revêtement constitué d'un thermoplastique résistant aux hautes températures, en particulier d'un revêtement en PEEK.

10. Machine électrique polyphasée selon l'une quelconque des revendications précédentes, dans laquelle les bobines d'enroulement (12) de l'enroulement (9) du stator (3, 4) sont bobinées en une seule couche et de manière concentrée.

11. Machine électrique polyphasée selon l'une quelconque des revendications précédentes, dans laquelle les encoches statoriques (13) sont raccordées en parallèle à un collecteur d'entrée destiné à l'amenée de liquide de refroidissement et peuvent être traversées en parallèle par le liquide de refroidissement, les encoches statoriques (13) des deux stators (3, 4) étant, au niveau d'une face frontale axiale des stators (3, 4), en communication fluidique avec un espace annulaire prévu sur ladite face frontale de stator pour l'amenée du liquide de refroidissement et/ou étant, au niveau d'une face frontale opposée des stators (3, 4), en communication fluidique avec un collecteur de sortie (16) prévu à cet endroit.

12. Machine électrique polyphasée selon l'une quelconque des revendications précédentes, dans laquelle le liquide de refroidissement est tout d'abord acheminé, dans des directions axiales opposées, depuis le côté froid du circuit de refroidissement, parallèlement à travers les encoches statoriques (13) destinées aux bobines d'enroulement (12), d'une face frontale jusqu'à la face frontale opposée du stator (3, 4), puis le liquide de refroidissement chauffé par les bobines d'enroulement (12) est ramené, dans la direction axiale opposée, à travers le support de stator jusqu'au côté d'arrivée.

13. Machine électrique polyphasée selon l'une quelconque des revendications précédentes, dans laquelle l'enroulement côté stator (9) comporte plus de quatre ou plus de six phases, avantageusement neuf phases.

14. Machine électrique polyphasée selon l'une quelconque des revendications précédentes, dans laquelle les phases de l'enroulement côté stator (9) sont raccordées à un circuit de commande destiné à alimenter individuellement en courant chacune des phases, et ledit circuit de commande comprend un onduleur (17) pourvu de ponts complets, notamment sous la forme de ponts en H (18), destiné à alimenter en courant les différentes phases avec un décalage temporel variable.

15. Engin de chantier et/ou engin de manutention, tel qu'une excavatrice, un tracteur à chenilles ou un tombereau, ou appareil de levage, tel qu'une grue, ou machine de travail agricole, comprenant une machine électrique polyphasée (1) réalisée selon l'une quelconque des revendications précédentes.
